# EUROPEAN PATENT APPLICATION

(11) **EP 1 614 827 A1**
(43) Date of publication of application: **11.01.2006**
(21) Application number: 04425492.8
(22) Date of filing: 06.07.2004
(51) Int. Cl.: E04F 13/08

(54) **Set of furniture panels and support structures**

(71) Applicant: Frati Laminati S.r.l., 27025 Belcreda di Gambolo' (PV) (IT)
(72) Inventor: Frati, Maria Giovanni, 46019 Viadana (MN) (IT)
(74) Representative: Marietti, Andrea

(57) **Abstract**

The invention relates to an ensemble consisting of at least one furnishing panel for interiors and a corresponding supporting structure to which each panel can be applied to, in order to form mobile walls, false walls, decorative walls or any other wall for similar uses, in which each panel is applied to and supported by the supporting structure by means of magnetic attraction exerted between at least one permanent magnet and at least one corresponding ferromagnetic element or at least one corresponding further permanent magnet, which are applied respectively on the panel and on the supporting structure, or vice versa, in facing positions and can be surface-coupled.

## Description

The present invention relates to an ensemble constituted by at least one furnishing panel and by one or more corresponding supporting structures which can be used for various applications, such as: mobile walls, panel walls, false walls, and decorative walls for shops, showrooms, etc.

Furthermore, the same ensemble can be used for components and/or structures for trade fairs, exhibitions and any premises in which it would be desirable to be able to carry out fast aesthetic and structural modifications.

In all of these applications, the supporting structure may be a dedicated structure, i.e., one designed exclusively or prevalently for supporting the panel or panels, but also an already existing structure to be used mainly for other purposes, such as for example fixed partition walls in particular settings, ceilings and floors or the like.

In the embodiments of the currently known art, the supporting structures are in general made so as to support the panel and at the same time enable its fixing thereof in a way that remains secure and stable over time. The commonly used structures are provided with appropriate side guides and seats to which each panel, or each set of panels, is engaged and fixed. However, assembly and setting in place of these mobile walls is laborious, requires somewhat long times and quite a lot of manpower, which must also be rather qualified.

Another problem arises when it is necessary to replace some panels, displace the entire wall or false wall or carry out modifications, such as to provide for the passage of wiring behind the panels or carry out changes of any other sort. In this case, with the panels according to the known art, in order to be able to intervene it is necessary to disassemble the panels and possibly also the structures, either in part or totally, with a considerable expenditure in terms of personnel, time and with consequent high costs.

Given the above indications, the purpose of the present invention is to provide an ensemble of the aforementioned type and for the aforementioned applications which will enable the operations of assembly and disassembly of the panels to be carried out in an extremely practical and easy way, without the need for qualified manpower. These operations prove to be in general necessary in the case of modifications on already mounted walls, and of replacement of individual panels possibly damaged or even worn out, without the need to take down and remount the corresponding supporting structure.

To achieve the above and yet other purposes, which will emerge from the ensuing description, the invention relates to an ensemble constituted by one or more panels of the aforementioned type and by one or more corresponding supporting structures basically according to Claim 1.

Particular embodiments and secondary characteristics of the invention are defined in the dependent claims.

The attached set of drawings illustrates some possible embodiments, in a schematic way and purely by way of example; namely:
Figure 1 illustrates, in a mutually facing position, the components of an ensemble according to the invention, consisting of a panel and a corresponding supporting structure, according to a first embodiment;
Figure 2 illustrates, in a symmetrical way with respect to Figure 1, an ensemble according to the invention in a second embodiment thereof; and
Figures 3 and 4 are perspective views of panels according to the invention viewed on the side of their face which is to be applied to the corresponding supporting structure.

The invention basically relates to an ensemble constituted by a furnishing panel for interiors and by a corresponding supporting structure to which there can be applied one or more panels for providing mobile walls, panel walls, false walls, decorative walls or the like, in which each panel is applied on and supported by the supporting structure by means of magnetic attraction exerted between at least one permanent magnet and at least one corresponding further permanent magnet or a corresponding ferromagnetic element. Applied to one of the two components of the ensemble, i.e., on the panel or on the supporting structure, is at least one permanent magnet, whilst on the other component of the ensemble, i.e., the supporting structure or the panel, is a second permanent magnet or a ferromagnetic element, the positions of said permanent magnets or ferromagnetic elements being such as to enable, in use, a reciprocal surface coupling, with retention by magnetic attraction.

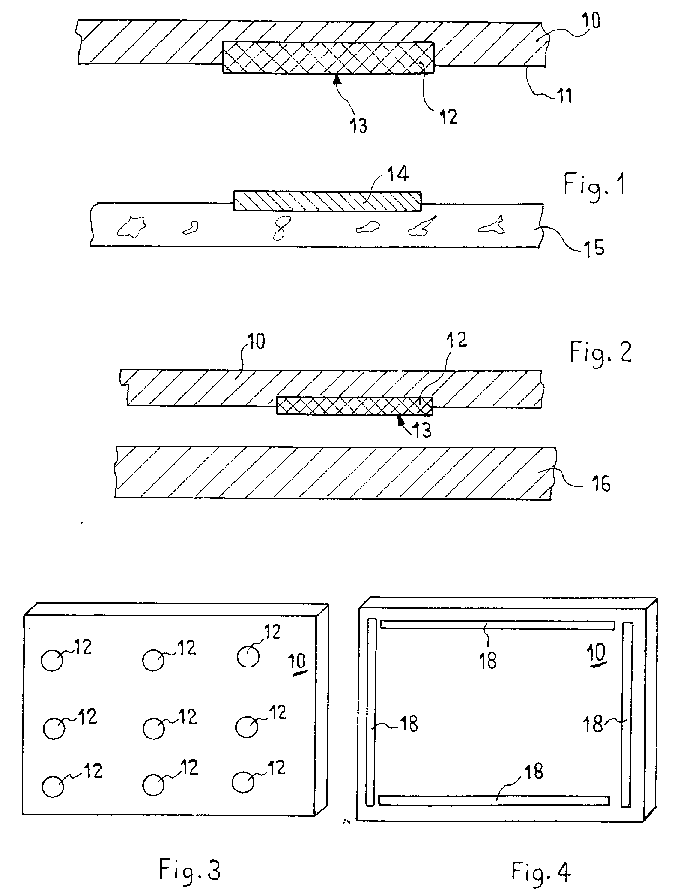

For example, with reference to Figure 1, a panel 10 is provided, which has, preferably built-into and projecting from a face 11 of the same panel 10, a plurality of magnets 12, each having an outer surface 13 that is substantially plane and smooth to provide maximum magnetic attraction in regard to an element 14 that is applied to a supporting structure 15, constituted, in the embodiment of Figure 1, for example by a wall made of masonry or other non-magnetic material.

The element 14 designed to be coupled to the magnet 12 may in turn be a magnet itself or simply a ferromagnetic element with a shape and dimensions substantially corresponding to those of the magnet 13, it being possible for said element 14 to be applied to the wall 15 with any suitable means, for example by gluing, as illustrated in the figure, or else using anchor bolts or the like. The magnet 13 and the magnet or ferromagnetic element 14 can have coupling surfaces of any shape, generally circular or rectangular, and will have to be in a sufficient number in order to enable stable and secure support of the weight of the panel 10 and whatever may be supported thereby.

The alternative embodiment of Figure 2 envisages a panel 10 with magnets 12, which is substantially the same as that of Figure 1 but can, however, be applied to a supporting structure 16 made of ferromagnetic material, which hence does not require application of particular elements for coupling with the magnets 12.

It is evident that, according to the desired embodiments and to the possibilities afforded by possible already existing supporting structures, one or more panels can be applied even on a single supporting structure, each panel being provided, for example, with a plurality of magnets, in a number such as to guarantee perfect application and secure support of the panel itself.

Application of the panels to the supporting structure, possibly prepared with magnetic or ferromagnetic elements 14, is extremely simple in so far as it is sufficient to bring the panels 10 up against the structures 15 or 16 so as to guarantee perfect magnetic adhesion of the magnets 12 to the surfaces designed to co-operate therewith.

To detach the panel it will be clearly sufficient to exert a tensile force thereon in a direction away from the supporting structure.

Figures 3 and 4 are schematic illustrations of a panel 10, the surface of which set facing the supporting structure and thus not visible after its application, has a plurality of permanent magnets 12 of a circular shape, set into the panel in suitable pre-set positions, the surfaces of the permanent magnets 12 which face the supporting structure preferably projecting slightly from the surface of the panel to guarantee in any case optimal magnetic attraction to the supporting structure, limiting, if necessary, the free space between the rear wall of the panel and the supporting structure.

Illustrated in Figure 4 is a panel 10, applied to which permanent magnets 18 are applied, available on the market, in the form of magnetic strips, which can be mounted on the panel for example by gluing. It is however, possible for said strips to be used in the case where it is necessary to support relatively small weights.

From tests carried out, it has been found that in order to provide an adequate support for the illustrated panels it is expedient to apply permanent magnets of the same type as the ones 12 of Figure 3, or even having another configuration, in a number such as to give rise to a surface of total retention, designed for application on ferromagnetic elements or on ferromagnetic structures, in the region of 3-5 cm² per kilogram of weight to be supported.

The panels are preferably made of HPL plastic laminate, but there may also be envisaged panels made of CPL plastic laminate, composite panels with wood base (whether ennobled or not), panels made of PVC, PET or the like, panels made of glass or the like, panels made of plasterboard or the like.

It should be noted that, although in the present description preference has been given to the application of permanent magnets on the panels, the invention can be perfectly applied also with a reciprocal arrangement, i.e., with ferromagnetic elements applied to the panels and permanent magnets applied to the supporting structure, especially in cases such as the ones illustrated in Figure 1, where the supporting structure is non-magnetic.

## Claims

1. An ensemble consisting of at least one furnishing panel for interiors and a corresponding supporting structure, to which each panel can be applied for the formation of mobile walls, panel walls, false walls, decorative walls or for similar uses, **characterized in that** each panel is applied on and supported by the supporting structure via magnetic attraction exerted between at least one permanent magnet and at least one corresponding ferromagnetic element or at least one corresponding further permanent magnet, which are applied respectively on the panel and on the supporting structure, or vice versa, in facing positions and can be surface-coupled.

2. The ensemble according to Claim 1, **characterized in that** the supporting structure is made of non-magnetic material and carries a plurality of permanent magnets or ferromagnetic elements shaped and positioned so as to correspond to the permanent magnets or to the ferromagnetic elements installed on each panel.

3. The ensemble according to Claim 1, **characterized in that** the supporting structure has at least parts made of ferromagnetic material, and each panel has a plurality of permanent magnets installed in positions facing and corresponding to the parts made of ferromagnetic material of the supporting structure.

4. The ensemble according to Claim 2 or Claim 3, **characterized in that** the permanent magnets and/or the ferromagnetic elements are constituted by plate-shaped components having constraint and retaining surfaces that are plane and basically smooth, designed to co-operate by resting against one another.

5. The ensemble according to Claim 4, **characterized in that** the permanent magnets are arranged set into each panel or into the supporting structure, with the corresponding retaining surface slightly projecting from the surface in which they are set in.

6. The ensemble according to any one of the preceding claims, **characterized in that** the permanent magnets are applied to the body of the panel in a number sufficient to support the panel itself and whatever may possibly be supported thereby.

7. The ensemble according to Claim 6, **characterized in that** the total retaining surface of the permanent magnets designed for application on ferromagnetic elements is of 3-5 cm² per kilogram of weight to be supported.

8. The ensemble according to any one of the preceding claims, **characterized in that** the panel is made of one of the following materials: HPL and CPL plastic laminates; composites with wood base, whether ennobled or not; PVC, PET and the like; glass and the like; plasterboard.

9. The ensemble according to Claim 8, **characterized in that** the panel is made of HPL plastic laminate.
